# EUROPÄISCHE PATENTSCHRIFT

(11) **EP 2 711 750 B1**
(45) Veröffentlichungstag und Bekanntmachung des Hinweises auf die Patenterteilung: **19.08.2015**
(21) Anmeldenummer: 13185768.2
(22) Anmeldetag: 24.09.2013
(51) Int. Cl.: G02B 6/00, F21Y 101/02, F21Y 105/00

(54) **LED-Leuchte mit Lichtleiterplatte**
LED light with optic panel
Lampe à DEL dotée d'une plaque de guide d'ondes optiques

(30) Priorität: 25.09.2012 DE 102012217293
(43) Veröffentlichungstag der Anmeldung: 26.03.2014
(73) Patentinhaber: Zumtobel Lighting GmbH, 6850 Dornbirn (AT)
(72) Erfinder: Spiegel, Michael, 6850 Dornbirn (AT); Bechter, Wolfgang, 6952 Hittisau (AT)
(74) Vertreter: Thun, Clemens

(56) Entgegenhaltungen:
- EP-A1- 2 581 658
- EP-A2- 2 473 002
- DE-U1- 20 102 832
- DE-U1-202011 000 598
- US-A1- 2008 304 288
- US-A1- 2012 127 756
- US-B1- 6 296 372

## Beschreibung

Die Erfindung betrifft eine Leuchte mit einem Trägerelement, an dem eine Lichtleiterplatte und eine LED-Lichtquelle gehaltert sind, wobei ein, von einer LED der LED-Lichtquelle abgestrahltes Licht an einer Schmalseite der Lichtleiterplatte in diese eingestrahlt wird, sowie mit einem Betriebsgerät zum Betrieb der LED-Lichtquelle.

Bei einer derartigen Leuchte besteht das Problem, dass bei Betrieb bzw. bei eingeschalteter LED-Lichtquelle sowohl die LED-Lichtquelle, als auch das Betriebsgerät in erheblichem Ausmaß Wärme erzeugen. Diese Wärme kann grundsätzlich dazu führen, dass die Effektivität der LED-Lichtquelle beeinträchtigt wird und unter Umständen sogar die Leuchte insgesamt Schaden nimmt.

Aus der EP 2 581 658 A1, die Stand der Technik gemäß Artikel 54 (3) EPÜ darstellt, ist eine Leuchte mit einem Trägerelement und einer daran gehalterten Lichtleiterplatte bekannt. Über eine schmale Seite wird Licht einer LED-Lichtquelle in die Lichteiterplatte eingestrahlt. Die Leuchte weist außerdem ein Betriebsgerät auf, das mit Bezug auf die Lichtleiterplatte mittig angeordnet ist.

Aus der US 2008/0304288 A1 ist eine plane Lichtabgabevorrichtung mit einem Trägerelement, einer Lichtleiterplatte und einer LED-Lichtquelle bekannt. Weiterhin umfasst die Vorrichtung ein Betriebsgerät, das von der LED-Lichtquelle beabstandet angeordnet ist.

Weitere Leuchten mit einem Trägerelement, einer LED-Lichtquelle, einer Lichtleiterplatte und einem Betriebsgerät sind aus den Schriften DE 20 2011 000 598 U1 und DE 201 02 832 U1 bekannt.

Der Erfindung liegt die Aufgabe zugrunde, eine entsprechende verbesserte Leuchte anzugeben. Insbesondere soll die Leuchte bei Betrieb grundsätzlich weniger Wärme erzeugen, die zur Gefährdung der elektrischen Komponenten, insbesondere der LED-Lichtquelle führen kann.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist eine Leuchte vorgesehen, die ein Trägerelement aufweist und eine, an dem Trägerelement gehalterte und in einer Ebene liegende Lichtleiterplatte, die eine erste Oberfläche aufweist, die auf einer ersten Seite der Ebene liegt und eine zweite Oberfläche, die auf einer, der ersten Seite gegenüber liegenden, zweiten Seite der Ebene liegt. Die Lichtleiterplatte weist dabei senkrecht zu der Ebene eine Dicke auf. Weiterhin weist die Leuchte eine, an dem Trägerelement gehalterte LED-Lichtquelle auf, die eine, die Ebene durchsetzende LED aufweist, die derart angeordnet ist, dass ein von der LED abgestrahltes Licht an einer Schmalseite der Lichtleiterplatte in diese eingestrahlt wird. Weiterhin weist die Leuchte ein Betriebsgerät zum Betrieb der LED-Lichtquelle auf. Dabei ist die Leuchte derart gestaltet, dass, in einem Querschnitt betrachtet, der normal zu der Ebene verläuft und dabei sowohl die LED, als auch das Betriebsgerät durchsetzt, der Abstand zwischen dem Betriebsgerät und der LED mehr als das Fünffache der Dicke der Lichtleiterplatte beträgt.

Durch diese Gestaltung sind die beiden "Wärmequellen", also die LED-Lichtquelle und das Betriebsgerät voneinander deutlich beabstandet. Dies hat zur Folge, dass die Wärme, die sich bei Betrieb in der Leuchte bildet, weniger konzentriert ist und somit grundsätzlich geringere Spitzenwerte erreicht. Hierdurch sind die Zuverlässigkeit und die Langlebigkeit der Leuchte verbessert.

Vorzugsweise ist die Leuchte dabei derart gestaltet, dass - in dem Querschnitt betrachtet - auf der, der zuerst genannten Schmalseite gegenüber liegenden Schmalseite der Lichtleiterplatte kein Licht in die Lichtleiterplatte eingestrahlt wird. Hierdurch lässt sich die Leuchte mit weniger Bauteilen gestalten.

Herstellungstechnisch vorteilhaft ist das Betriebsgerät an dem Trägerelement gehaltert angeordnet.

Vorzugsweise ist die Leuchte weiterhin derart gestaltet, dass das Betriebsgerät auf der zweiten Seite der Ebene angeordnet ist und dabei in einem weiteren Abstand von der Lichtleiterplatte, der mehr als das Doppelte der Dicke der Lichtleiterplatte beträgt. Hierdurch lässt sich erzielen, dass Wärme, die von dem Betriebsgerät ausgeht, besonders effektiv wegtransportiert werden kann.

Vorzugsweise weist die Lichtleiterplatte Auskoppelstrukturen auf, durch die ein an der Schmalseite in die Lichtleiterplatte eingestrahltes Licht durch die erste Oberfläche der Lichtleiterplatte ausgekoppelt wird. Hierdurch lässt sich mit der Leuchte eine effektive Beleuchtung auf der ersten Seite der Ebene erzielen, beispielsweise zur Erzeugung einer direkten Beleuchtung.

Dabei weist die Lichtleiterplatte vorzugsweise außerdem weitere Auskoppelstrukturen auf, durch die ein an der Schmalseite in die Lichtleiterplatte eingestrahltes Licht durch die zweite Oberseite der Lichtleiterplatte ausgekoppelt wird. Hierdurch lässt sich mit der Leuchte eine effektive Beleuchtung auf der zweiten Seite der Ebene erzielen, beispielsweise zur Erzeugung einer indirekten Beleuchtung. Auf diese Weise ist lediglich eine LED-Lichtquelle zur Erzeugung einer Lichtabgabe nach beiden Seiten erforderlich.

Vorzugsweise ist die Leuchte derart gestaltet, dass das Trägerelement eine Außenfläche der Leuchte bildet oder das Trägerelement thermisch mit einem Rahmenelement verbunden ist, das eine Außenfläche der Leuchte bildet. Hierdurch ist eine besonders gute Ableitung von Wärme, die durch die LED-Lichtquelle erzeugt wird, nach außen ermöglicht. Besonders bevorzugt besteht hierzu das Trägerelement aus Aluminium und gegebenenfalls besteht bevorzugt auch das Rahmenelement aus Aluminium.

Erfindungsgemäß weist die Leuchte außerdem eine weitere Lichtleiterplatte 6 auf, die derart an einem Randbereich der zuerst genannten Lichtleiterplatte 4 angeordnet ist, dass sie eine Flächennormale *N* aufweist, die mit der Ebene *E* einen Winkel *α* einschließt, der zwischen 45° und 80° beträgt, vorzugsweise zwischen 50° und 75°. Hierdurch lässt sich das äußere Erscheinungsbild der Leuchte besonders vorteilhaft gestalten.

Herstellungstechnisch vorteilhaft ist die Leuchte länglich gestaltet, so dass sie sich längs einer Längsachse erstreckt, wobei die Lichtleiterplatte ebenfalls länglich ist und sich ebenfalls längs der Längsachse erstreckt und der Randbereich der zuerst genannten Lichtleiterplatte auf der Längsachse liegt.

Eine besonders effektive Lichtabgabe ist ermöglicht, wenn die Gestaltung derart ist, dass die Schmalseite der Lichtleiterplatte parallel zu der Längsachse verläuft.

Weiterhin vorzugsweise weist die Leuchte außerdem eine weitere LED-Lichtquelle auf, die derart angeordnet ist, dass ein von ihr abgestrahltes Licht an einer Schmalseite der weiteren Lichtleiterplatte in diese eingestrahlt wird, die parallel zu der Ebene verläuft.

Vorzugsweise ist die weitere Lichtquelle an dem Trägerelement gehaltert angeordnet, besonders bevorzugt über einen, insbesondere aus Metall bestehenden Bügel. Hierdurch ist eine besonders effektive Abfuhr von Wärme von der weiteren LED-Lichtquelle ermöglicht.

Die Erfindung wird im Folgenden anhand eines Ausführungsbeispiels und mit Bezug auf die Zeichnungen näher erläutert. Es zeigen:
- Fig. 1: eine Skizze einer erfindungsgemäßen Leuchte,
- Fig. 2: eine Skizze zum Aufbau der Leuchte nach Art einer Explosionsdarstellung,
- Fig. 3: eine Querschnittdarstellung der Leuchte,
- Fig. 4: eine perspektivische angeschnittene Darstellung der Leuchte,
- Fig. 5: eine Längsschnittdarstellung eines Endbereichs der Leuchte,
- Fig. 6: eine entsprechende perspektivische Skizze von schräg unten,
- Fig. 7: eine entsprechende perspektivische Skizze von schräg oben,
- Fig. 8: eine perspektivische Ansicht des Endbereichs von schräg oben im nicht längsgeschnittenen Zustand,
- Fig. 9: eine entsprechende Skizze nach Art einer Explosionsdarstellung,
- Fig. 10: eine entsprechende Skizze des separierten Reflektor-Stimteils und
- Figuren 11 und 12: zwei entsprechende perspektivische Skizzen des Reflektor-Stimteils von schräg unten.

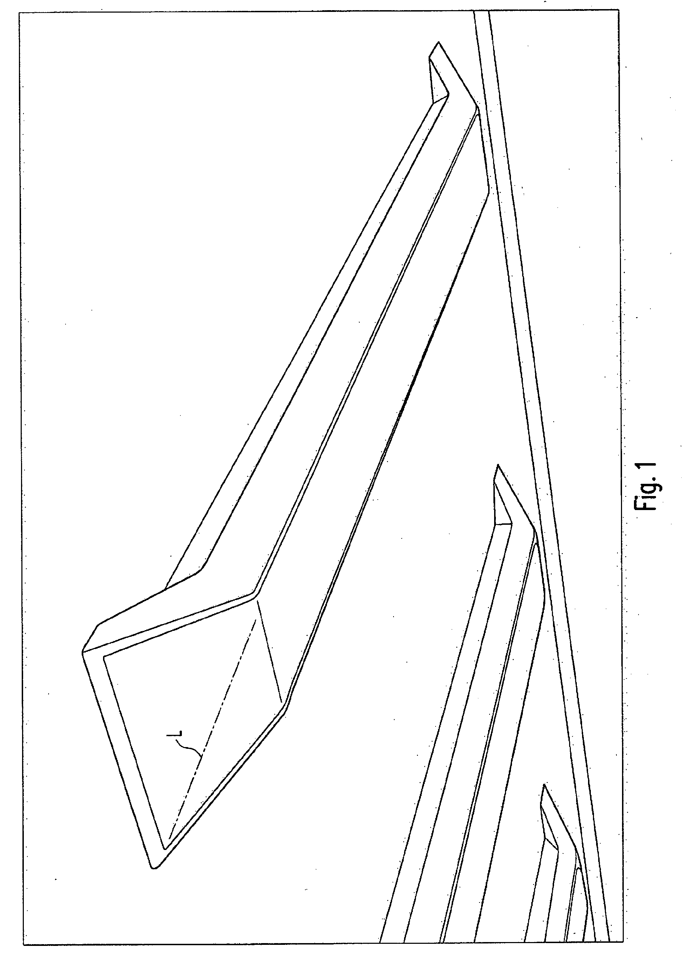

Fig. 1 zeigt eine Skizze einer erfindungsgemäßen Leuchte. Die Leuchte ist gemäß diesem Beispiel als Anbauleuchte ausgestaltet, insbesondere als Deckenanbauleuchte. Der Einfachheit halber wird in der folgenden Beschreibung von einer Orientierung der Leuchte ausgegangen, wie sie sich im gezeigten Fall einer Deckenanbauleuchte ergibt, wenn die Leuchte wie vorgesehen an einer horizontalen Decke betriebsbereit montiert ist. Allerdings ist diese Ausrichtung der Leuchte nicht erfindungswesentlich. Die Leuchte könnte grundsätzlich auch für eine andere Ausrichtung vorgesehen sein. In diesem Fall sind die Richtungsangaben etc. in der folgenden Beschreibung entsprechend umzudeuten.

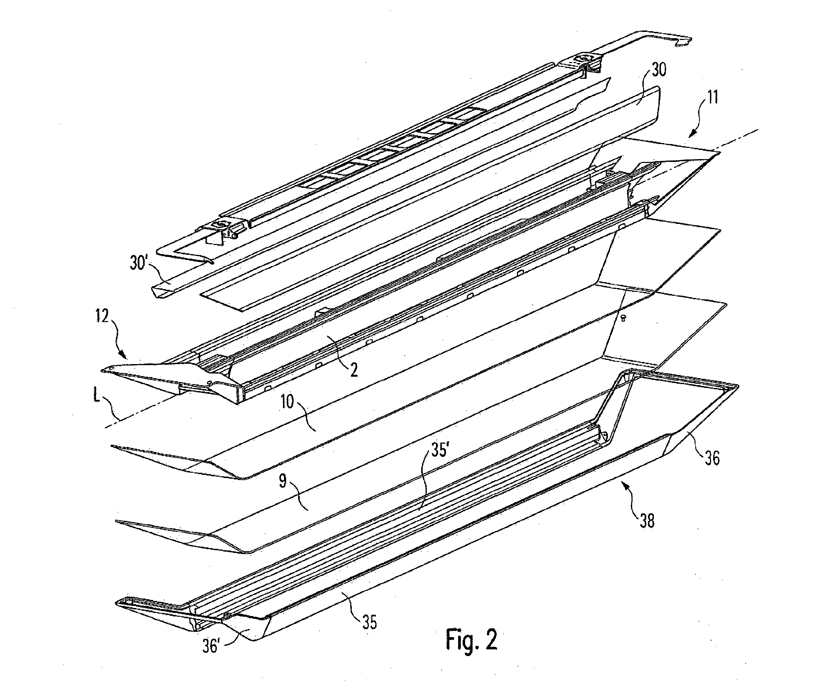

In Fig. 2 ist eine Skizze zum Aufbau der Leuchte nach Art einer Explosionsdarstellung gezeigt. Beim Ausführungsbeispiel ist die Leuchte insgesamt länglich gestaltet, so dass sie sich entlang einer Längsachse *L* erstreckt und mit Bezug auf die Längsachse *L* einen ersten Endbereich 11 und hierzu gegenüber liegend einen zweiten Endbereich 12 aufweist. Die Leuchte weist ein Trägerelement 2 auf, das vorzugsweise profilartig gestaltet ist und dabei parallel zu der Längsachse *L* ausgerichtet ist. Bei dem Trägerelement 2 kann es sich insbesondere um ein zentrales Stützelement der Leuchte handeln, am dem weitere Bauteile der Leuchte gehaltert sind. Das Trägerelement 2 kann beispielsweise aus Aluminium bestehen und beispielsweise als Strangpressprofil gestaltet sein.

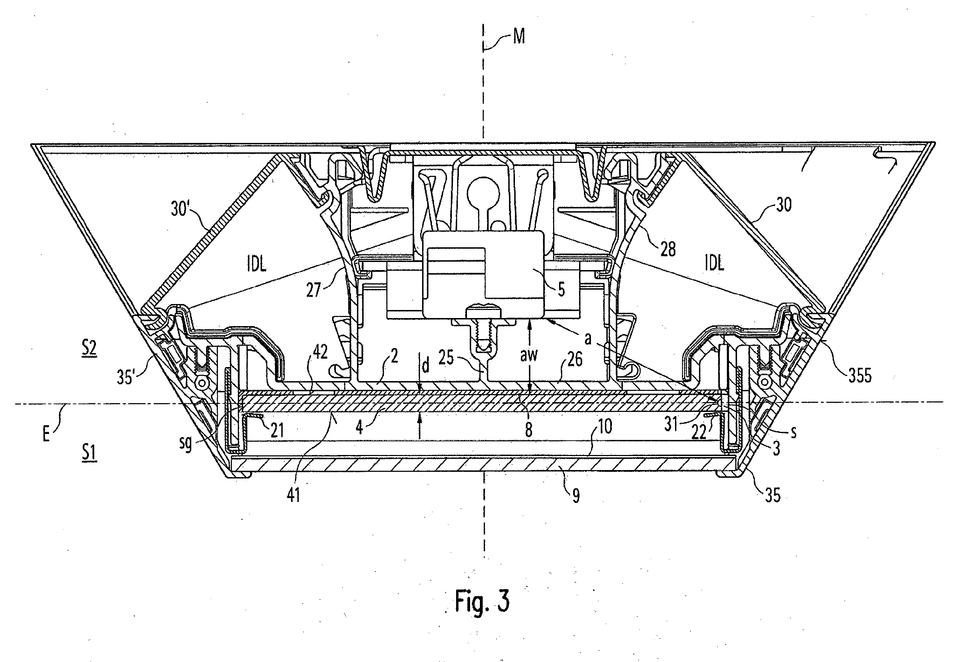

In Fig. 3 ist ein Querschnitt der Leuchte normal zu der Längsachse *L* skizziert. Die Leuchte weist weiterhin eine Lichtleiterplatte 4 auf, die in einer - hier horizontalen - Ebene *E* liegt und die an dem Trägerelement 2 gehaltert angeordnet ist. Zur Halterung der Lichtleiterplatte 4 an dem Trägerelement 2 kann wenigstens ein Rastelement 21 vorgesehen sein, insbesondere in Form einer Klammer. Vorzugsweise sind zwei entsprechende Rastelemente 21, 22 vorgesehen, die in dem Querschnitt betrachtet die Lichtleiterplatte 4 an beiden Seiten am Trägerelement 2 halten.

Die Lichtleiterplatte 4 weist eine erste Oberfläche 41 auf, die auf einer ersten Seite *S1* der Ebene *E* liegt, hier unterhalb der Ebene *E,* sowie eine zweite Oberfläche 42, die auf einer, der ersten Seite *S1* gegenüber liegenden zweiten Seite *S2* der Ebene *E* liegt, hier oberhalb der Ebene *E*.

Senkrecht zu der Ebene *E* weist die Lichtleiterplatte 4 eine Stärke bzw. Dicke *d* auf.

Wie im gezeigten Beispiel der Fall, kann die Lichtleiterplatte 4 insgesamt länglich sein und dabei parallel zu der Längsachse *L* ausgerichtet sein. Dabei kann die Lichtleiterplatte 4 aus einem Stück bestehen, sie kann aber auch beispielsweise durch mehrere, längs der Längsachse *L* in einer Reihe angeordneter Lichtleiterplatten-Einzelelemente gebildet bzw. zusammengesetzt sein.

Weiterhin weist die Leuchte eine LED-Lichtquelle 3 auf, die ebenfalls an dem Trägerelement 2 gehaltert ist. Die LED-Lichtquelle 3 umfasst eine LED 31, die die Ebene *E* durchsetzt und die derart angeordnet ist, dass ein, von der LED 31 abgestrahltes Licht an einer Schmalseite *s* der Lichtleiterplatte 4 in diese eingestrahlt bzw. eingekoppelt wird. Insbesondere kann die LED-Lichtquelle 3 eine Platine aufweisen, auf der die LED 31 angeordnet ist; vorzugsweise weist die LED-Lichtquelle 3 mehrere LEDs auf, die jeweils in der Ebene *E* angeordnet sind, wobei die Gestaltung derart ist, dass ein von diesen LEDs abgestrahltes Licht an der Schmalseite s in die Lichtleiterplatte 4 eingestrahlt wird. Wie im gezeigten Beispiel der Fall, kann sich die Schmalseite *s* parallel zur Längsachse *L* erstrecken. Bei der Platine kann es sich dabei um eine entsprechende längliche Platine handeln, die sich ebenfalls parallel zur Längsachse *L* erstreckt. Es kann vorgesehen sein, dass die Platine lediglich eine Reihe von LEDs aufweist, wobei die LEDs der Reihe längs der Längsachse *L* angeordnet sind.

Zum Betrieb der LED-Lichtquelle 4 weist die Leuchte weiterhin ein Betriebsgerät 5 auf. Vorzugsweise ist das Betriebsgerät 5 an dem Trägerelement 2 gehaltert angeordnet.

Der in Fig. 3 skizzierte Normalschnitt verläuft normal zu der Ebene *E* und dabei sowohl durch die LED 31, als auch durch das Betriebsgerät 5. Die Leuchte ist derart gestaltet, dass - in einem solchen Querschnitt betrachtet - der Abstand *α* zwischen dem Betriebsgerät 5 und der LED 31 mehr als das Fünffache der Dicke *d* der Leiterplatte 4 beträgt. Hierdurch sind die Wärmequellen der Leuchte deutlich voneinander getrennt, wodurch die Gefahr einer Beeinträchtigung von elektrischen Komponenten der Leuchte durch Überhitzung verringert ist.

Wenn die LED-Lichtquelle 3 mehrere LEDs aufweist, ist die Gestaltung vorzugsweise derart, dass die genannte Abstandsbedingung für jede der LEDs der LED-Lichtquelle 3 erfüllt ist. Besonders bevorzugt ist dabei die Gestaltung derart, dass - in dem Querschnitt betrachtet - der horizontale Abstand zwischen der LED 31 und dem Betriebsgerät 5 mehr als das Fünffache der Dicke *d* der Leiterplatte 4 beträgt.

Herstellungstechnisch vorteilhaft ist die Leuchte derart gestaltet, dass - in dem Querschnitt betrachtet - auf der, der zuerst genannten Schmalseite *s* gegenüber liegenden Schmalseite *sg* der Lichtleiterplatte 4 kein Licht in die Lichtleiterplatte 4 eingestrahlt wird, also an dieser gegenüber liegenden Schmalseite *sg* keine Lichtquelle, insbesondere keine LED-Lichtquelle angeordnet ist.

Das Betriebsgerät 5 ist beim gezeigten Beispiel auf der zweiten Seite *S2* der Ebene *E* angeordnet, hier also oberhalb der Lichtleiterplatte 4 und dabei in einem weiteren Abstand *αw,* der mehr als das Doppelte der Dicke *d* der Lichtleiterplatte 4 beträgt. Hierdurch lässt sich erzielen, dass Wärme, die von dem Betriebsgerät 5 erzeugt wird, besonders gut abtransportiert werden kann. Wie im gezeigten Beispiel der Fall, weist das Trägerelement 2 hierzu vorzugsweise einen Steg 25 auf, der sich zwischen der Lichtleiterplatte 4 einerseits und dem Betriebsgerät 5 andererseits erstreckt.

Das Trägerelement 2 umfasst vorzugsweise einen plattenförmigen Abschnitt 26, der parallel zu der Ebene *E* angeordnet ist und auf dem die Lichtleiterplatte 4 angeordnet ist. Im gezeigten Beispiel ist zwischen der Lichtleiterplatte 4 und dem plattenförmigen Abschnitt 26 des Trägerelements 2 ein Reflektorelement 8 angeordnet. Der Steg 25 ist insbesondere derart angeordnet, dass er zumindest in erster Näherung rechtwinklig zu dem plattenförmigen Abschnitt 26 verläuft.

Wie beim gezeigten Beispiel der Fall kann das Trägerelement 2 noch zwei Wandelemente 27, 28 aufweisen, die sich ebenfalls von dem plattenförmigen Abschnitt 26 aus nach oben erstrecken, wobei sie derart angeordnet sind, dass sie, in dem Querschnitt betrachtet, zwischen sich das Betriebsgerät 5 einschließen. Durch die beiden Wandelemente 27, 28 und den plattenförmigen Abschnitt 26 kann ein Geräteraum der Leuchte gebildet sein, in dem sich das Betriebsgerät 5 befindet. Auch weitere Bauteile der Leuchte, wie etwa eine elektrische Klemme können in diesem Geräteraum angeordnet sein.

Vorzugsweise weist die Lichtleiterplatte 4 Auskoppelstrukturen auf, durch die ein von der Schmalseite *s* in die Lichtleiterplatte 4 eingestrahltes Licht durch die erste Oberfläche 41 der Lichtleiterplatte 4 ausgekoppelt wird. Die Auskoppelstrukturen können beispielsweise auf der zweiten Oberfläche 42 der Lichtleiterplatte 4 ausgebildet sein. Insbesondere sind die Auskoppelstrukturen derart, dass durch sie ein von der LED 31 oder der LED-Lichtquelle 3 an der Schmalseite *s* eingekoppeltes Licht durch die erste Oberfläche 41 in den unteren Halbraum abgegeben wird.

Durch entsprechende Gestaltung der Auskoppelstrukturen lässt sich erzielen, dass sich über die erste Oberfläche 41 der Lichtleiterplatte 4 hinweg eine besonders gleichmäßige Lichtabgabe ergibt. Hierzu können die Auskoppelstrukturen insbesondere unterschiedliche gegenseitige Abstände aufweisen, die mit zunehmendem Abstand von der LED-Lichtquelle 3 kleiner werden.

Alternativ kann natürlich auf der gegenüber liegenden Schmalseite *sw* der Lichtleiterplatte 4 eine weitere LED-Lichtquelle zur Einkopplung von weiterem Licht in die Lichtleiterplatte 4 vorgesehen sein. Auch in diesem Fall sind die Auskoppelstrukturen vorzugsweise derart gestaltet, dass sich über die erste Oberfläche 41 hinweg betrachtet eine möglichst gleichmäßige Lichtabgabe ergibt.

Im gezeigten Beispiel weist die Leuchte an ihrer Unterseite ein lichtdurchlässiges Abdeckelement 9 auf, durch das Licht in der Folge hindurchtritt, bevor es die Leuchte verlässt. Dieses Licht kann insbesondere zur Erzeugung einer direkten Beleuchtung dienen. Die Gestaltung ist dabei vorzugsweise derart, dass sich in dem betrachteten Querschnitt das Abdeckelement 9 parallel zu der Lichtleiterplatte 4 erstreckt.

Das Abdeckelement 9 kann beispielsweise aus Kunststoff bestehen.

Das Abdeckelement 9 weist vorzugsweise eine Struktur auf, die eine Richtungsverteilung des Lichts beeinflusst. Beispielsweise kann es sich hierbei um Prismenstrukturen handeln.

Durch die nach unten weisende Oberfläche des Abdeckelements 9 oder eine (in den Figuren nicht gezeigte), auf dieser von unten aufliegenden Folie, kann eine Lichtabgabefläche der Leuchte gebildet sein.

Im Vergleich zu mehreren LEDs, die in einer Horizontalen angeordnet matrixartig oberhalb des Abdeckelements 9 angeordnet sind, lässt sich durch die Verwendung der beschriebenen Lichtleiterplatte 4 der senkrechte Abstand zu dem Abdeckelement 9 verringern, um eine gegebene Gleichmäßigkeit der Lichtabgabe zu erzielen. Die Leuchte lässt sich also insgesamt flacher gestalten.

Auf der nach oben weisenden Oberfläche des Abdeckelements 9 aufliegend kann noch eine Folie 10 vorgesehen sein, die dazu dient, das Licht besonders gleichmäßig erscheinen zu lassen.

Weiterhin vorzugsweise weist die Lichtleiterplatte 4 außerdem weitere Auskoppelstrukturen auf, durch die ein von der Schmalseite *s* in die Lichtleiterplatte 4 eingestrahltes Licht durch die zweite Oberfläche 42 der Lichtleiterplatte 4 ausgekoppelt wird, hier also in den oberen Halbraum.

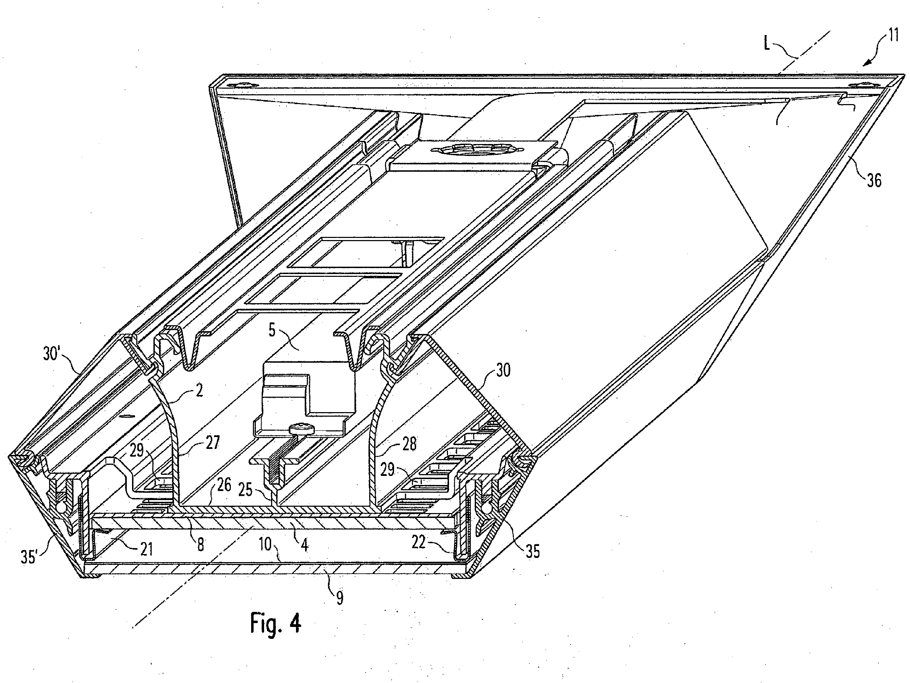

In Fig. 4 ist eine perspektivische Skizze einer quer-angeschnittenen Leuchte gezeigt. Wie in dieser Skizze exemplarisch dargestellt, erstreckt sich beim gezeigten Beispiel das Trägerelement 4 in dem Querschnitt betrachtet auf beiden Seiten über die Lichtleiterplatte 4 hinaus. Um dennoch eine Lichtabgabe nach oben zu ermöglichen, sind in dem plattenförmigen Abschnitt 26 des Trägerelements 2 außerhalb der beiden Wandelemente 27, 28 jeweils Löcher 29 ausgebildet, die zum Durchtritt von Licht dienen. Auch das Reflektorelement 8 kann gegebenenfalls dementsprechende Öffnungen bzw. Löcher aufweisen.

Seitlich der beiden Wandelemente 27, 28 können - wie in Fig. 3 bezeichnet - "Indirektlichtkammern" *IDL* gebildet sein, die zur Erzeugung einer Indirekt-Beleuchtung dienen und die nach außen jeweils durch eine lichtdurchlässige Abdeckung 30, 30', beispielsweise aus Kunststoff abgedeckt sind.

Vorzugsweise ist die Gestaltung derart, dass die Leuchte Licht zu einem größeren Teil nach unten zur Erzeugung einer direkten Beleuchtung abgibt und zu einem kleineren Teil Licht nach oben zur Erzeugung einer indirekten Beleuchtung. Durch geeignete Wahl der Auskoppelstrukturen, der weiteren Auskoppelstrukturen und/oder durch Gestaltung der Löcher 29 in dem Trägerelement 2 und gegebenenfalls in dem Reflektorelement 8 kann auf einfache Weise ein gewünschtes Verhältnis der Lichtabgabe nach unten zu der Lichtabgabe nach oben eingestellt bzw. erzielt werden.

Ein besonders effektiver Wärmeabtransport von der LED-Lichtquelle 3 in einen Außenbereich der Leuchte lässt sich beispielsweise erzielen, wenn das Trägerelement 2 eine Außenfläche der Leuchte bildet. Alternativ kann - wie im gezeigten Beispiel der Fall - die Leuchte weiterhin ein seitliches Rahmenelement 35 aufweisen, das thermisch leitend mit dem Trägerelement 2 verbunden ist und das eine Außenfläche 355 der Leuchte bildet. Im gezeigten Beispiel besteht das seitliche Rahmenelement 35 aus Aluminium und ist beispielsweise über eine Schraubverbindung thermisch leitend mit dem Trägerelement 2 verbunden. Vorzugsweise ist das seitliche Rahmenelement 35 als Strangpressprofilteil gestaltet und parallel zu der Längsachse *L* orientiert angeordnet.

Wie beispielsweise aus Fig. 2 hervorgeht, kann das seitliche Rahmenelement 35 Teil eines Rahmens 38 sein, wobei der Rahmen 38 weiterhin ein weiteres seitliches Rahmenelement 35' aufweist, das mit Bezug auf eine durch die Längsachse *L* verlaufende, in Fig. 3 skizzierte, Mittelvertikalebene *M* der Leuchte dem zuerst genannten seitlichen Rahmenelement 35 gegenüberliegend und zu diesem analog ausgebildet angeordnet ist. Die beiden seitlichen Rahmenelemente 35, 35' sind vorzugsweise jeweils als Profilteile, beispielsweise als Strangpressprofile, ausgestaltet und dabei parallel zu der Längsachse *L* ausgerichtet angeordnet.

Im gezeigten Beispiel ist die genannte Außenfläche 355 des seitlichen Rahmenelements 35 mit Bezug auf die Mittelvertikalebene *M* schräg nach innen geneigt und das weitere seitliche Rahmenelement 35' spiegelsymmetrisch gestaltet, so dass die Außenflächen der beiden seitlichen Rahmenelemente 35, 35' nach unten hin konvergieren. Dabei erstrecken sie sich so weit nach unten, dass sie das Abdeckelement 9 randseitig untergreifen; dort bilden sie seitliche Begrenzungen der Lichtabgabefläche. Damit weist die Leuchte in dem genannten Querschnitt eine Teil-Querschnittfläche auf, die in erster Näherung ein Trapez beschreibt. Diese Trapezform erstreckt sich nach oben hin bis über das Niveau der Ebene *E.*

Die lichtdurchlässigen Abdeckungen 30, 30' schließen sich praktisch unmittelbar an die beiden oberen Ränder der beiden seitlichen Rahmenelemente 35, 35' an und sind dabei wiederum spiegelsymmetrisch und dabei zur Mittelvertikalebene *M* hin geneigt, also nach oben konvergierend gestaltet, so dass sich im Querschnitt betrachtet hierdurch eine zweite Trapezform ergibt.

Wieder mit Bezug auf Fig. 2 kann der Rahmen 38 außerdem ein erstes stirnseitiges Rahmenelement 36 und ein zweites stirnseitiges Rahmenelement 36' aufweisen, wobei das erste stirnseitige Rahmenelement 36 das seitliche Rahmenelement 35 und das weitere seitliche Rahmenelement 35' an dem ersten Endbereich 11 der Leuchte miteinander verbindet und das zweite stirnseitige Rahmenelement 36' das seitliche Rahmenelement 35 und das weitere seitliche Rahmenelement 35' an dem zweiten Endbereich 12 der Leuchte miteinander verbindet. Im gezeigten Beispiel besteht der Rahmen 38 aus dem seitlichen Rahmenteil 35, dem weiteren seitlichen Rahmenelement 35', dem ersten stirnseitigen Rahmenelement 36 und dem zweiten stirnseitigen Rahmenelement 36', wobei die genannten Teile zusammen eine ringförmig geschlossene Struktur bilden. Die beiden stirnseitigen Rahmenelemente 36, 36' bestehen vorzugsweise aus Aluminium; beispielsweise kann es sich um Aluminium-Druckgussteile handeln.

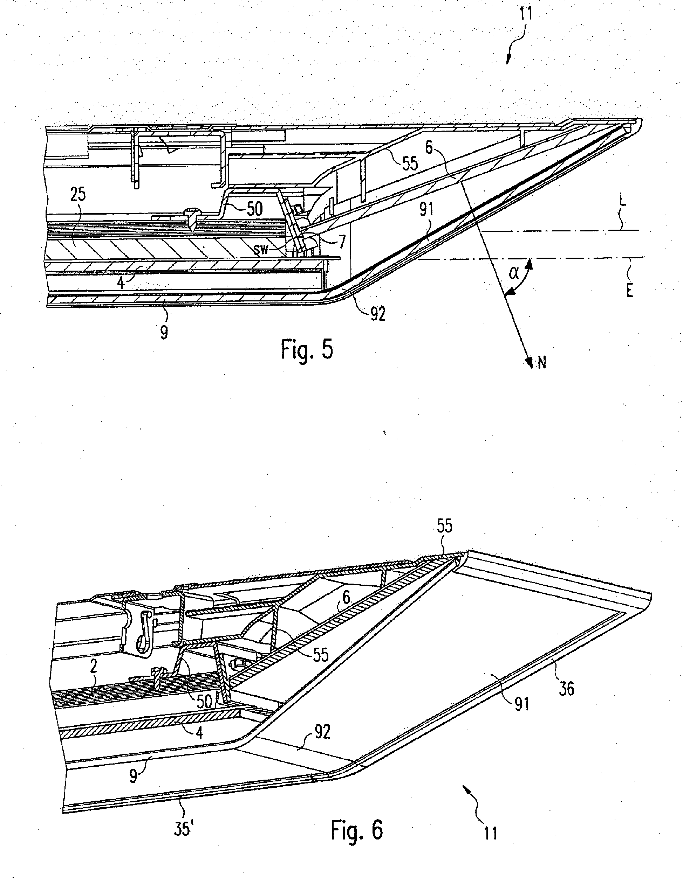

Fig. 5 zeigt eine Längsschnittdarstellung um den ersten Endbereich 11 der Leuchte, Fig. 6 eine entsprechende perspektivische Ansicht von schräg unten. Wie beispielhaft in Fig. 5 gezeigt, kann die Leuchte außerdem eine weitere Lichtleiterplatte 6 aufweisen, die derart an einem Randbereich der zuerst genannten Lichtleiterplatte 4 angeordnet ist, dass sie eine Flächennormale *N* aufweist, die mit der Ebene *E* einen Winkel *α* einschließt, der zwischen 45° und 80° beträgt, vorzugsweise zwischen 50° und 75°, beispielsweise 70°. Wie gezeigt, kann es sich - mit Bezug auf die Längsachse *L* - bei dem Randbereich um dasjenige Ende des Trägerelements 2 handeln das sich an dem ersten Endbereich 11 der Leuchte befindet. Der Randbereich kann in diesem Fall insbesondere auf der Längsachse *L* liegen.

Vorzugsweise ist die weitere Lichtleiterplatte 7 oberhalb der Ebene *E* angeordnet.

Durch die weitere Lichtleiterplatte 6 lässt sich erzielen, dass die Lichtabgabefläche der Leuchte an dem ersten Endbereich 11 einen, nach schräg oben verlaufenden Endabschnitt aufweist, der sich - wie exemplarisch aus Fig. 1 hervorgeht - bis praktisch an die Decke erstrecken kann. Hierdurch lässt sich das Erscheinungsbild der Leuchte besonders gut gestalten. Vorteilhaft ist das Abdeckelement 9 hierbei so geformt, dass es von einem planen, horizontal ausgerichteten Mittelabschnitt über eine Krümmung 92 in einen planen, aber geneigten Endabschnitt 91 übergeht, der sich vorzugsweise bis praktisch zur Decke hin erstreckt. Beispielsweise kann vorgesehen sein, dass sich der geneigte Endabschnitt 91 mindestens bis auf ein Niveau erstreckt, das höchstens 20 mm unter der Obergrenze der Leuchte liegt.

Wie beispielsweise aus Fig. 2 hervorgeht, ist das erste stirnseitige Rahmenelement 36 vorzugsweise in erster Näherung U-förmig gestaltet, wobei die beiden U-Schenkel mit ihren freien Enden mit den seitlichen Rahmenelementen 35, 35' verbunden sind. Die beiden U-Schenkel erstrecken sich dabei nach oben zu, also zu ihrem Verbindungsschenkel hin, divergierend.

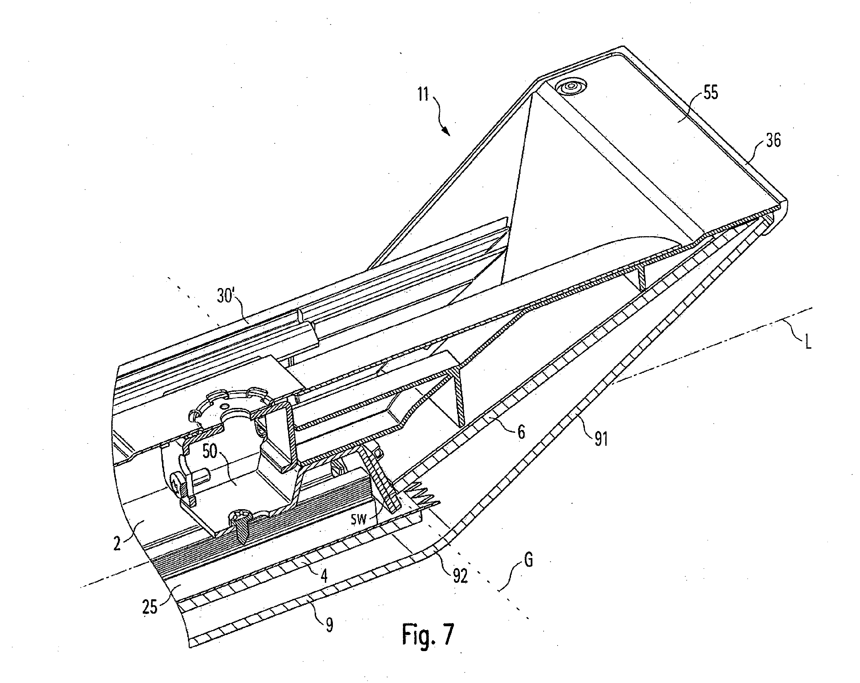

Um Licht in die weitere Lichtleiterplatte 6 einzustrahlen, weist die Leuchte vorzugsweise außerdem eine weitere LED-Lichtquelle 7 auf, die derart angeordnet ist, dass ein von ihr abgestrahltes Licht an einer Schmalseite *sw* der weiteren Lichtleiterplatte 6 in diese eingestrahlt wird, die parallel zu der Ebene *E* verläuft. In Fig. 7 ist eine weitere perspektivische, im Längsschnitt angeschnittene Ansicht des ersten Endbereichs 11 gezeigt. Die weitere LED-Lichtquelle 7 kann analog zu der zuerst genannten LED-Lichtquelle 3 gestaltet sein, also eine Platine umfassen, auf der, längs einer Geraden *G*, mehrere LEDs angeordnet sind. Vorzugsweise ist die weitere LED-Lichtquelle 7 derart orientiert, dass sie sich rechtwinklig zu der Längsachse *L* erstreckt.

Die weitere Lichtleiterplatte 6 weist vorzugsweise - in Analogie zu der zuerst genannten Lichtleiterplatte 3 - wiederum Auskoppelstrukturen auf, durch die ein an der Schmalseite *sw* in die weitere Lichtleiterplatte 6 eingekoppeltes Licht über die nach schräg unten weisende Oberfläche der weiteren Lichtleiterplatte 6 ausgekoppelt wird. Hierdurch lässt sich in besonders geeigneter Weise eine mit Bezug auf die Längsachse *L* stirnseitige Gestaltung der Lichtabgabe zur Erzeugung der direkten Beleuchtung erzielen.

Wie im gezeigten Beispiel der Fall, ist der geneigte Endabschnitt 91 des Abdeckelements 9 im Vergleich zu der weiteren Lichtleiterplatte 6 und mit Bezug auf die Horizontale etwas stärker geneigt, so dass sich die beiden genannten Bauteile 91, 6 - im Längsschnitt betrachtet - in Richtung auf den äußersten Rand des ersten Endbereichs 11 zu einander annähern bzw. konvergieren.

Zur Halterung der weiteren LED-Lichtquelle 7 kann die Leuchte einen Bügel 50 aufweisen, der beispielsweise über eine Schraubverbindung an dem Trägerelement 2, insbesondere an dem Steg 25, gehaltert ist. Wenn der Bügel 50 aus Metall besteht, beispielsweise aus Aluminium, dient er auch zu einer besonders effektiven Ableitung von Wärme, die durch die weitere LED-Lichtquelle 7 erzeugt wird.

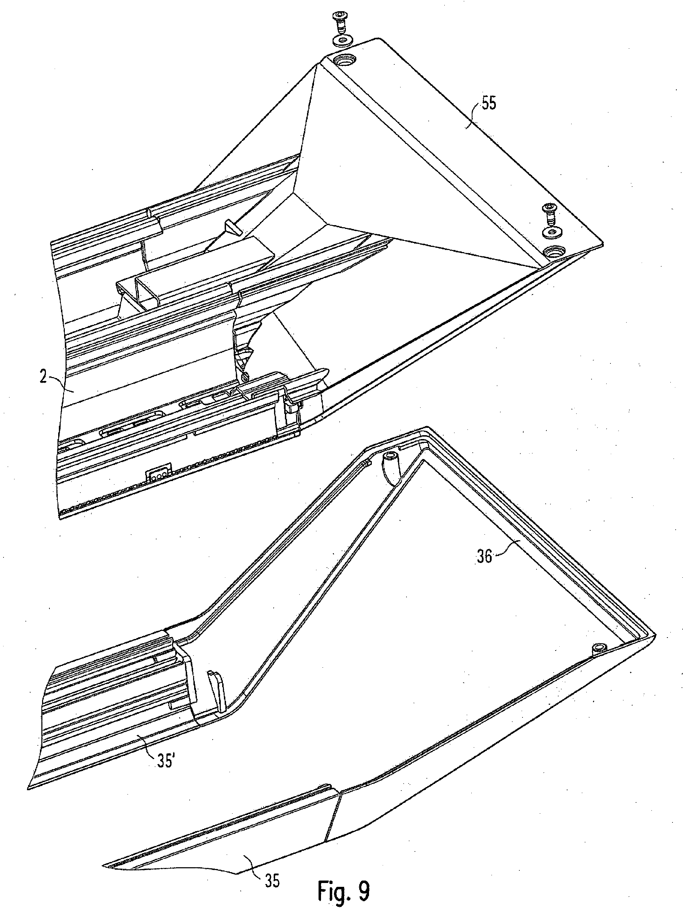

Im gezeigten Beispiel weist die Leuchte außerdem zur Lichtbeeinflussung an dem ersten Endbereich 11 ein Reflektor-Stirnteil 55 auf, das in der Längsachse *L* an das Trägerelement 2 anschließt und beispielsweise über eine Nietverbindung an Letzterem gehaltert ist. Das Reflektor-Stirnteil 55 kann zusammen mit dem ersten stirnseitigen Rahmenelement 36 zur Halterung der weiteren Lichtleiterplatte 7 ausgebildet sein. In Fig. 9 sind nach Art einer Explosionsdarstellung das Reflektor-Stirnteil 55 und das erste stirnseitige Rahmenelement 36 skizziert.

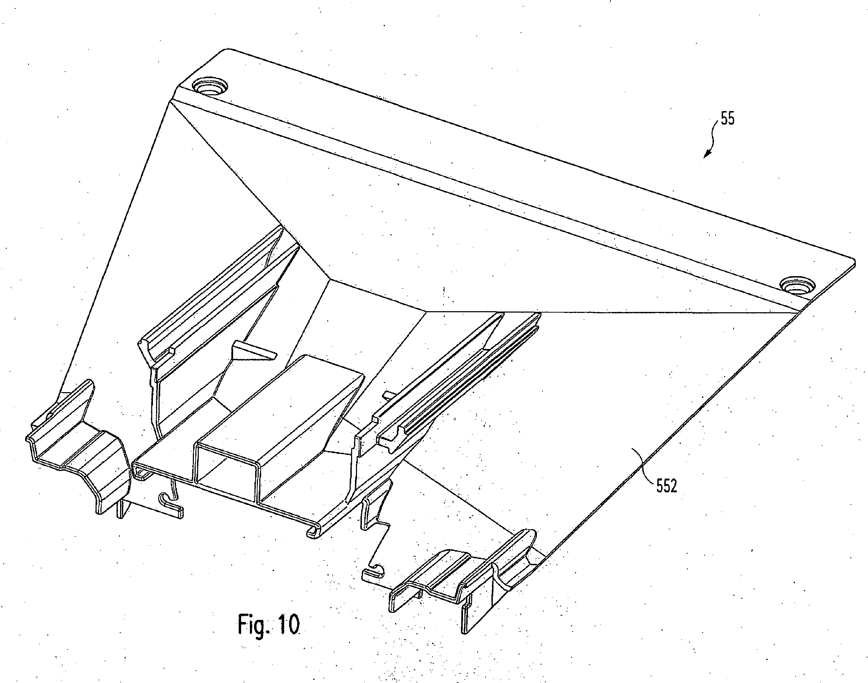

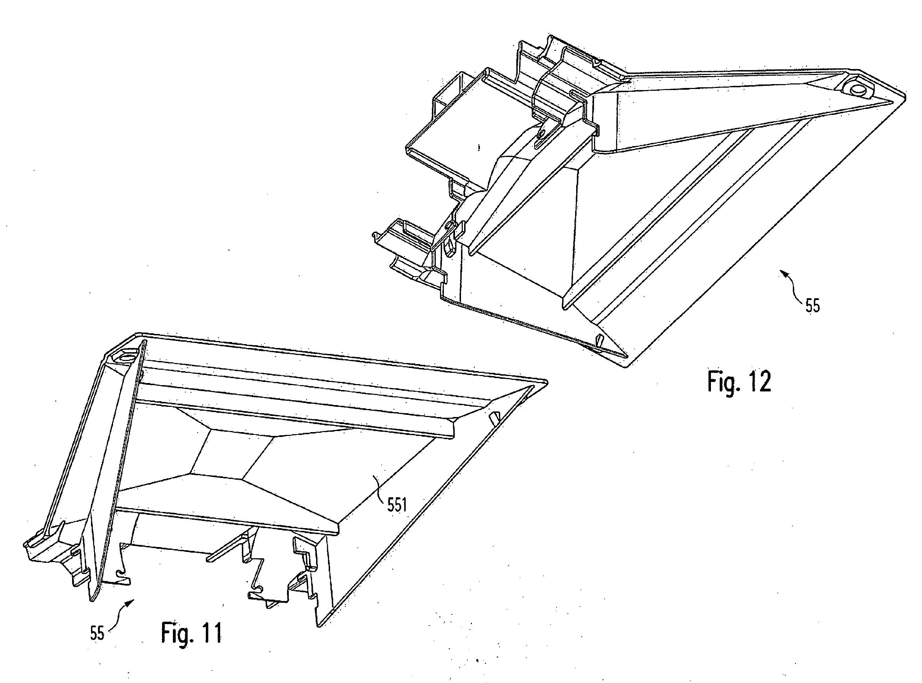

Fig. 10 zeigt eine perspektivische Ansicht des separierten Reflektor-Stimteils 55 von schräg oben, die Figuren 11 und 12 entsprechende Ansichten von schräg unten. Wie beispielhaft in Fig. 11 gezeigt, weist das Reflektor-Stirnteil 55 vorzugsweise eine nach unten weisende, reflektierende Fläche 551 auf, die zur Steigerung der Effizienz mit Bezug auf die Lichtabgabe nach schräg unten dient.

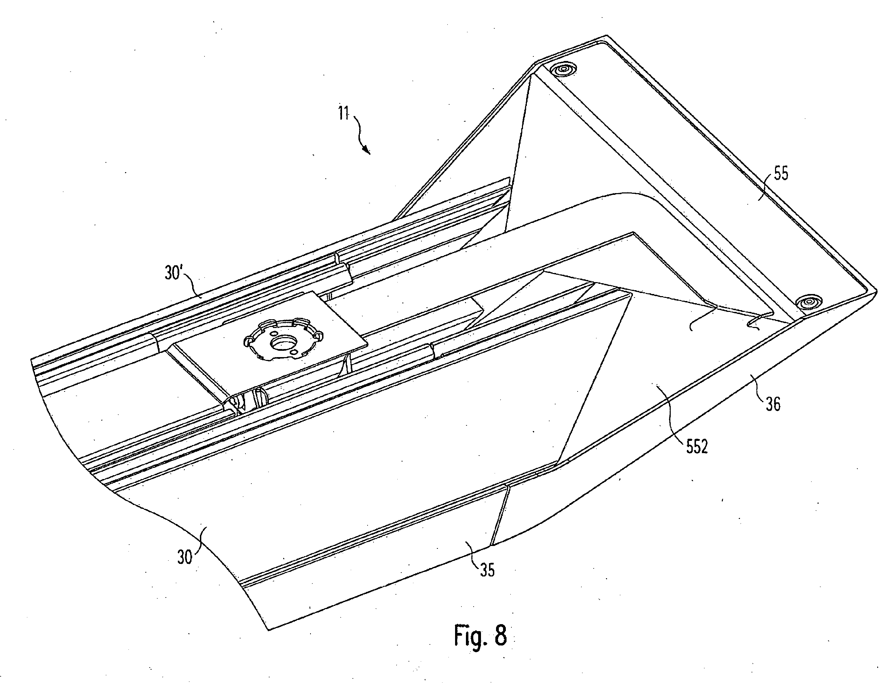

Fig. 8 zeigt eine perspektivische Ansicht des ersten Endbereichs 11 von schräg oben. Wie beispielhaft gezeigt, erstreckt sich die lichtdurchlässige Abdeckung 30 bis zu einer, nach schräg oben weisenden Fläche 552 des Reflektor-Stirnteils 55. Diese nach schräg oben weisende Fläche 552 ist vorzugsweise ebenfalls reflektierend gestaltet, so dass das Licht, das durch die oben genannten Löcher 29 in die Indirektlichtkammern *IDL* gelangt, effektiv bis in den ersten Endbereich 11 hinein geleitet wird. Die weitere Abdeckung 30' ist vorzugsweise analog, insbesondere mit Bezug auf die Mittelvertikalebene *M* symmetrisch hierzu gestaltet.

Wie sich aus den Figuren 1 und 2 ergibt, ist der zweiten Endbereich 12 der Leuchte vorzugsweise analog zu dem ersten Endbereich 11 gestaltet. Hierdurch ergibt sich eine besondere Eignung der Leuchte als Deckenanbauleuchte.

## Patentansprüche

1. Leuchte, aufweisend
- ein Trägerelement (2),
- eine, an dem Trägerelement (2) gehalterte, in einer Ebene (*E*) liegende Lichtleiterplatte (4), die eine erste Oberfläche (41) aufweist, die auf einer ersten Seite (*S1*) der Ebene (*E*) liegt und eine zweite Oberfläche (42), die auf einer, der ersten Seite (*S1*) gegenüber liegenden, zweiten Seite (*S2*) der Ebene (*E*) liegt, wobei die Lichtleiterplatte (4) senkrecht zu der Ebene (*E*) eine Dicke (*d*) aufweist,
- eine, an dem Trägerelement (2) gehalterte LED-Lichtquelle (3), die eine, die Ebene (*E*) durchsetzende LED (31) aufweist, die derart angeordnet ist, dass ein von der LED (31) abgestrahltes Licht an einer Schmalseite (*s*) der Lichtleiterplatte (4) in diese eingestrahlt wird,
- ein Betriebsgerät (5) zum Betrieb der LED-Lichtquelle (3),
wobei die Leuchte derart gestaltet ist, dass, in einem Querschnitt betrachtet, der normal zu der Ebene (*E*) verläuft und dabei sowohl die LED (31), als auch das Betriebsgerät (5) durchsetzt, der Abstand (*a*) zwischen dem Betriebsgerät (5) und der LED (31) mehr als das Fünffache der Dicke (*d*) der Lichtleiterplatte (4) beträgt,
**gekennzeichnet durch**
- eine weitere Lichtleiterplatte (6), die derart an einem Randbereich der zuerst genannten Lichtleiterplatte (4) angeordnet ist, dass sie eine Flächennormale (*N*) aufweist, die mit der Ebene *(E)* einen Winkel (α) einschließt, der zwischen 45° und 80° beträgt.

2. Leuchte nach Anspruch 1,
die derart gestaltet ist, dass - in dem Querschnitt betrachtet - auf der, der zuerst genannten Schmalseite (*s*) gegenüber liegenden Schmalseite (*sg*) der Lichtleiterplatte (4) kein Licht in die Lichtleiterplatte (4) eingestrahlt wird.

3. Leuchte nach einem der vorhergehenden Ansprüche,
bei der das Betriebsgerät (5) an dem Trägerelement (2) gehaltert angeordnet ist.

4. Leuchte nach einem der vorhergehenden Ansprüche,
die derart gestaltet ist, dass das Betriebsgerät (5) auf der zweiten Seite (*S2*) der Ebene (*E*) angeordnet ist und dabei in einem weiteren Abstand (*aw*) von der Lichtleiterplatte (4), der mehr als das Doppelte der Dicke (*d*) der Lichtleiterplatte (4) beträgt.

5. Leuchte nach einem der vorhergehenden Ansprüche,
bei der die Lichtleiterplatte (4) Auskoppelstrukturen aufweist, durch die ein an der Schmalseite (*s*) in die Lichtleiterplatte (4) eingestrahltes Licht durch die erste Oberfläche (41) der Lichtleiterplatte (4) ausgekoppelt wird.

6. Leuchte nach Anspruch 5,
bei der die Lichtleiterplatte (4) außerdem weitere Auskoppelstrukturen aufweist, durch die ein an der Schmalseite (*s*) in die Lichtleiterplatte (4) eingestrahltes Licht durch die zweite Oberseite (42) der Lichtleiterplatte (4) ausgekoppelt wird.

7. Leuchte nach einem der vorhergehenden Ansprüche,
die derart gestaltet ist, dass das Trägerelement (2) eine Außenfläche der Leuchte bildet oder das Trägerelement (2) thermisch mit einem Rahmenelement (35) verbunden ist, das eine Außenfläche (355) der Leuchte bildet.

8. Leuchte nach Anspruch 7,
bei der das Trägerelement (2) aus Aluminium besteht und gegebenenfalls das Rahmenelement (35) aus Aluminium besteht.

9. Leuchte nach einem der vorhergehenden Ansprüche,
bei der der Winkel (α) zwischen 50° und 75° beträgt.

10. Leuchte nach einem der vorhergehenden Ansprüche,
die länglich gestaltet ist, so dass sie sich längs einer Längsachse (*L*) erstreckt, wobei die Lichtleiterplatte (4) ebenfalls länglich ist und sich ebenfalls längs der Längsachse (*L*) erstreckt und der Randbereich der zuerst genannten Lichtleiterplatte (4) auf der Längsachse (*L*) liegt.

11. Leuchte nach Anspruch 10,
bei der die Schmalseite (*s*) der Lichtleiterplatte (4) parallel zu der Längsachse (*L*) verläuft.

12. Leuchte nach einem der vorhergehenden Ansprüche, weiterhin aufweisend
- eine weitere LED-Lichtquelle (7), die derart angeordnet ist, dass ein von ihr abgestrahltes Licht an einer Schmalseite (*sw*) der weiteren Lichtleiterplatte (4) in diese eingestrahlt wird, die parallel zu der Ebene (*E*) verläuft.

13. Leuchte nach Anspruch 12,
bei der die weitere Lichtquelle (7) an dem Trägerelement (2) gehaltert angeordnet ist, vorzugsweise über einen, insbesondere aus Metall bestehenden Bügel (50).

## Claims

1. Luminaire, having
- a support element (2),
- a light conductor board (4), mounted on the support element (2) and located on a level (E), having a first surface area (41) located on a first side (S1) of the level (E) and a second surface area (42) located on a second side (S2), opposite the first side (S1), of the level (E), wherein the light conductor board (4) has a thickness (d) perpendicular to the level (E),
- a LED light source (3), mounted on the support element (2), having a LED (31), permeating the level (E), arranged in such a way that a light emitted from the LED (31) irradiates on a narrow side (s) of the light conductor board (4) therein,
- an operating device (5) for operating the LED light source (3), wherein the luminaire is designed in such a way that, if viewed in a cross-section running normally to the level (E) while permeating both the LED (31) and the operating device (5), the distance (a) between the operating device (5) and the LED (31) is more than five times that of the thickness (d) of the light conductor board (4),
**characterized by**
- another light conductor board (6), which is arranged on an edge area of the aforementioned light conductor board (4) in such a way that it has a surface normal (N) forming with the level (E) an angle (a) that is between 45° and 80°.

2. Luminaire according to claim 1, designed in such a way that - viewed in the cross-section - no light is irradiated into the light conductor board (4) on the narrow side (sg), of the light conductor board, located opposite the aforementioned narrow side (s).

3. Luminaire according to one of the preceding claims wherein the operating device (5) is arranged being mounted on the support element (2).

4. Luminaire according to one of the preceding claims, designed in such a way that the operating device (5) is arranged on the second side (S2) of the level (E) and at the same time at another distance (aw) from the light conductor board (4) that is more than double than the thickness (d) of the light conductor board (4).

5. Luminaire according to one of the preceding claims, wherein the light conductor board (4) has coupling-out structures through which a light, irradiated on the narrow side (s) into the light conductor board (4), is coupled out through the first surface area (41) of the light conductor board (4).

6. Luminaire according to claim 5, wherein the light conductor board (4) furthermore has further coupling-out structures through which a light, irradiated on the narrow side (s) into the light conductor board (4), is coupled out through the second top side (42) of the light conductor board (4).

7. Luminaire according to one of the preceding claims, designed in such a way that the support element (2) forms an outer surface of the luminaire or the support element (2) is thermally connected with a frame element (35) that forms an outer surface (355) of the luminaire.

8. Luminaire according to claim 7, wherein the support element (2) is made of aluminum and, where applicable, the frame element (35) is made of aluminum.

9. Luminaire according to one of the preceding claims, wherein the angle (a) is between 50° and 75°.

10. Luminaire according to one of the preceding claims, having an oblong design so that it extends alongside of a longitudinal axis (L), wherein the light conductor board (4) is also oblong and also extends alongside of the longitudinal axis (L) and the edge area of the aforementioned light conductor board (4) is located on the longitudinal axis (L).

11. Luminaire according to claim 10, where the narrow side (s) of the light conductor board (4) runs parallel to the longitudinal axis (L).

12. Luminaire according to one of the preceding claims furthermore having
- another LED light source (7) arranged in such a way that a light emitted by it is irradiated on a narrow side (sw) of the further light conductor board (4) therein running parallel to the level (E).

13. Luminaire according to claim 12, where the further light source (7) is arranged being mounted on the support element (2), preferably via a bracket (50), in particular made of metal.

## Revendications

1. Luminaire, comportant
- un élément de support (2),
- une carte de conducteur de lumière (4), montée sur l'élément de support (2) et située sur un plan (*E*), ayant une première zone de surface (41) située sur un premier côté (*S1*) du niveau (*E*) et une seconde zone de surface (42) située sur un second côté (*S2*)*,* opposé au premier côté (*S1*) du niveau (*E*), dans lequel la carte de conducteur de lumière (4) possède une épaisseur (*d*) perpendiculaire au niveau (*E*),
- une source lumineuse à DEL (3), montée sur l'élément de support (2), ayant une DEL (31) pénétrant le niveau (*E*), disposée de sorte qu'une lumière émise par la DEL (31) s'irradie sur un côté étroit (*s*) de la carte de conducteur de lumière (4),
- un dispositif de fonctionnement (5) servant à faire fonctionner la source lumineuse à DEL (3), dans lequel le luminaire est conçu de telle manière que, s'il est vu en coupe se développant normalement vers le niveau (*E*) et pénétrant la DEL (31) et le dispositif de fonctionnement (5, la distance (a) entre le dispositif de fonctionnement (5) et la DEL (31) est supérieure à cinq fois celle de l'épaisseur (*d*) de la carte de conducteur de lumière (4),
**caractérisé par**
- une autre carte de conducteur de lumière (6) étant disposée sur une zone de bord de la susdite carte de conducteur de lumière (4) de sorte qu'elle dispose d'une normale à la surface (N) formant avec le niveau (*E*) un angle (α) compris entre 45° et 80°.

2. Luminaire selon la revendication 1, configuré de telle manière que, vu en coupe, aucune lumière n'est irradiée dans la carte de conducteur de lumière (4) sur le côté étroit (*sg*), de la carte de conducteur de lumière (4) située à l'opposé du côté étroit susmentionné (*s*).

3. Luminaire selon l'une des revendications précédentes, dans lequel le dispositif de fonctionnement (5) est disposé monté sur l'élément de support (2).

4. Luminaire selon l'une des revendications précédentes, configuré de sorte que le dispositif de fonctionnement (5) est disposé sur le second côté (*S2*) du niveau (*E*) et en même temps à une autre distance (*aw*) de la carte de conducteur de lumière (4) étant du plus du double de l'épaisseur (*d*) de la carte de conducteur de lumière (4).

5. Luminaire selon l'une des revendications précédentes, dans lequel la carte de conducteur de lumière (4) possède des structures de découplage à travers lesquelles une lumière, irradiée sur le côté étroit (*s*) dans la carte de conducteur de lumière (4), est découplée à travers la première zone de surface (41) de la carte de conducteur de lumière (4).

6. Luminaire selon la revendication 5, dans lequel la carte de conducteur de lumière (4) possède de plus des structures de découplage à travers lesquelles une lumière, irradiée sur le côté étroit (s) dans la carte de conducteur de lumière (4), est découplée à travers le second côté supérieur (42) de la carte de conducteur de lumière (4).

7. Luminaire selon l'une des revendications précédentes, configuré de manière à ce que l'élément de support (2) forme une surface externe du luminaire ou l'élément de support (2) est raccordé thermiquement à un élément de châssis (35) qui forme une surface externe (355) du luminaire.

8. Luminaire selon la revendication 7, dans lequel l'élément de support (2) est en aluminium et, le cas échéant, l'élément de châssis (35) est en aluminium.

9. Luminaire selon l'une des revendications précédentes, dans lequel l'angle (α) est compris entre 50° et 75°.

10. Luminaire selon l'une des revendications précédentes, ayant une forme oblongue de sorte qu'il se développe le long d'un axe longitudinal (*L*), dans lequel la carte de conducteur de lumière (4) est aussi oblongue et se développe aussi le long de l'axe longitudinal (*L*) et la zone de bord de la susdite carte de conducteur de lumière (4) est située sur l'axe longitudinal (*L*).

11. Luminaire selon la revendication 10, dans lequel le côté étroit (*s*) de la carte de conducteur de lumière (4) se développe parallèlement à l'axe longitudinal (*L*).

12. Luminaire selon l'une des revendications précédentes, comprenant de plus :
- une autre source lumineuse à DEL (7) disposée de manière à ce qu'une lumière émise par celle-ci est irradiée sur un côté étroit (*sw*) de la carte de conducteur de lumière supplémentaire (4) se développant en parallèle par rapport au niveau (*E*).

13. Luminaire selon la revendication 12, dans lequel la source lumineuse supplémentaire (7) est disposée montée sur l'élément de support (2), de préférence par le biais d'un crochet (50), en particulier, fabriqué en métal.
